# EUROPEAN PATENT APPLICATION

(11) **EP 4 113 858 A1**
(43) Date of publication of application: **04.01.2023**
(21) Application number: 22180539.3
(22) Date of filing: 22.06.2022
(51) Int. Cl.: H04B 7/08, H04B 7/0452

(54) **MULTI-USER MIMO PEER-TO-PEER TRANSMISSION**

(30) Priority: 29.06.2021 US 202117305022
(71) Applicant: Cisco Technology, Inc., San Jose, CA 95134 (US)
(72) Inventor: ALIZADEH, Ardalan, San Jose, 95134 (US); SILVERMAN, Matthew, San Jose, 95134 (US); MONAJEMI, Pooya, San Jose, 95134 (US); BHANAGE, Gautam, San Jose, 95134 (US); KALAVAKURU, Sivadeep, San Jose, 95134 (US)
(74) Representative: Jarrett, Daniel Phillip

(57) **Abstract**

Techniques for peer-to-peer (P2P) transmission in a multi-user (MU) multiple-input-multiple-output (MIMO) environment. A first wireless station (STA), including a plurality of radio antennas, identifies channel state information (CSI) relating to a connection between the first STA and a wireless access point (AP). The first STA determines connection information relating to a MU MIMO P2P connection between the first STA and a second STA. The first STA generates a plurality of values relating to precoding for the plurality of radio antennas, based on the CSI and the connection information. The first STA and the second STA exchange data over the P2P connection, using the plurality of values relating to precoding.

## Description

### TECHNICAL FIELD

Embodiments presented in this disclosure generally relate to wireless communication. More specifically, one or more embodiments disclosed herein relate to peer-to-peer (P2P) transmission in a multi-user (MU) multiple-input-multiple-output (MIMO) environment.

### BACKGROUND

In infrastructure Wi-Fi networks, a wireless station (STA) (e.g., a computer, smartphone, tablet, vehicle, Internet of Things (loT) device, or any other suitable wireless device) typically communicates with other STAs using a wireless access point (AP). For example, an STA with data for another STA in the same network typically transmits the data to its associated AP, and the AP then transmits the data to the destination STA. But if the STAs are in transmission range of each other, these two-hop transmission lead to channel waste and inefficient transmission. Instead, P2P transmission from the source STA to the destination STA may be more efficient.

### BRIEF DESCRIPTION OF THE DRAWINGS

So that the manner in which the above-recited features of the present disclosure can be understood in detail, a more particular description of the disclosure, briefly summarized above, may be had by reference to embodiments, some of which are illustrated in the appended drawings. It is to be noted, however, that the appended drawings illustrate typical embodiments and are therefore not to be considered limiting; other equally effective embodiments are contemplated.
Figure 1 is a block diagram illustrating MU MIMO P2P transmission, according to one embodiment.
Figure 2 illustrates an AP and an STA for MU MIMO P2P transmission, according to one embodiment.
Figure 3 illustrates MU MIMO P2P transmission with an uplink from an STA to an AP, according to one embodiment.
Figure 4 is a flowchart illustrating MU MIMO P2P transmission with an uplink from an STA to an AP, according to one embodiment.
Figure 5 illustrates MU MIMO P2P transmission with a downlink from an AP to an STA, according to one embodiment.
Figure 6 is a flowchart illustrating MU MIMO P2P transmission with a downlink from an AP to an STA, according to one embodiment.
Figure 7 illustrates MU MIMO P2P transmission with simultaneous STA transceivers, according to one embodiment.
Figure 8 is a flowchart illustrating use of full channel state information for MU MIMO P2P transmission with simultaneous STA transceivers, according to one embodiment.
Figure 9 is a flowchart illustrating use of partial channel state information for MU MIMO P2P transmission with simultaneous STA transceivers, according to one embodiment.
Figure 10 is a flowchart illustrating MU MIMO P2P transmission among STAs and an AP, according to one embodiment.

To facilitate understanding, identical reference numerals have been used, where possible, to designate identical elements that are common to the figures. It is contemplated that elements disclosed in one embodiment may be beneficially used in other embodiments without specific recitation.

### DESCRIPTION OF EXAMPLE EMBODIMENTS

### OVERVIEW

Embodiments include a method. The method includes identifying, at a first wireless station (STA) including a plurality of radio antennas, channel state information (CSI) relating to a connection between the first STA and a wireless access point (AP). The method further includes determining, at the first STA, connection information relating to a multi-user (MU) multiple-input-multiple-output (MIMO) peer-to-peer connection between the first STA and a second STA. The method further includes generating at the first STA a plurality of values relating to precoding for the plurality of radio antennas, based on the CSI and the connection information. The method further includes exchanging data over the peer-to-peer connection between the first STA and the second STA, using the plurality of values relating to precoding.

Embodiments further include a system, including a processor, and a memory having instructions stored thereon which, when executed on the processor, performs an operation. The operation includes identifying, at a first wireless station (STA) including a plurality of radio antennas, channel state information (CSI) relating to a connection between the first STA and a wireless access point (AP). The operation further includes determining, at the first STA, connection information relating to a multi-user (MU) multiple-input-multiple-output (MIMO) peer-to-peer connection between the first STA and a second STA. The operation further includes generating at the first STA a plurality of values relating to precoding for the plurality of radio antennas, based on the CSI and the connection information. The operation further includes exchanging data over the peer-to-peer connection between the first STA and the second STA, using the plurality of values relating to precoding.

Embodiments further include a non-transitory computer-readable medium having instructions stored thereon which, when executed by a processor, performs an operation. The operation includes identifying, at a first wireless station (STA) including a plurality of radio antennas, channel state information (CSI) relating to a connection between the first STA and a wireless access point (AP). The operation further includes determining, at the first STA, connection information relating to a multi-user (MU) multiple-input-multiple-output (MIMO) peer-to-peer connection between the first STA and a second STA. The operation further includes generating at the first STA a plurality of values relating to precoding for the plurality of radio antennas, based on the CSI and the connection information. The operation further includes exchanging data over the peer-to-peer connection between the first STA and the second STA, using the plurality of values relating to precoding.

Techniques for peer-to-peer (P2P) transmission in a multi-user (MU) multiple-input-multiple-output (MIMO) environment are provided. A first wireless station (STA), including a plurality of radio antennas, identifies channel state information (CSI) relating to a connection between the first STA and a wireless access point (AP). The first STA determines connection information relating to a MU MIMO P2P connection between the first STA and a second STA. The first STA generates a plurality of values relating to precoding for the plurality of radio antennas, based on the CSI and the connection information. The first STA and the second STA exchange data over the P2P connection, using the plurality of values relating to precoding.

### EXAMPLE EMBODIMENTS

As discussed above, P2P transmission between STAs that are in range with each other can increase efficiency and avoid channel waste. Existing wireless standards (e.g., 802.11be) provide some support for direct links between STAs. For example, P2P transmission between STAs associated with an AP can use a portion of the transmit opportunity (TXOP) duration allocated to that AP. In an embodiment, the AP can announce the allocation to its associated STAs using a trigger message, or another suitable message. The STAs can then use single-user (SU) transmission for direct communication among themselves. This can be referred to as a triggered P2P solution (e.g., the AP triggers the P2P connection between STAs).

Existing techniques, however, do not take advantage of MU MIMO capabilities in the network. For example, existing techniques do not take advantage of multiple antennas available on many APs and STAs to improve P2P transmission. In an embodiment, one or more techniques disclosed herein facilitate P2P MU MIMO transmission among APs (e.g., using multiple antennas). For example, one or more techniques disclosed herein can be used to identify channel state information (CSI) for connections between an AP and STAs, and for connections between STAs. This CSI can be used by transmitting devices to generate precoding matrices, and by receiving devices to generate suitable decoders, to facilitate MU MIMO transmission (e.g., with multiple antennas) while avoid contention and other potential drawbacks.

Further, many WiFi standards include random channel access. In a MU MIMO environment, a receiver can use the CSI to separate received packets from multiple clients. This CSI information may not be available in advance because the pilot signals (e.g., legacy long training field (L-LTF) or extremely high throughput (EHT)-LTF) are included in each physical-layer protocol data unit (PPDU).

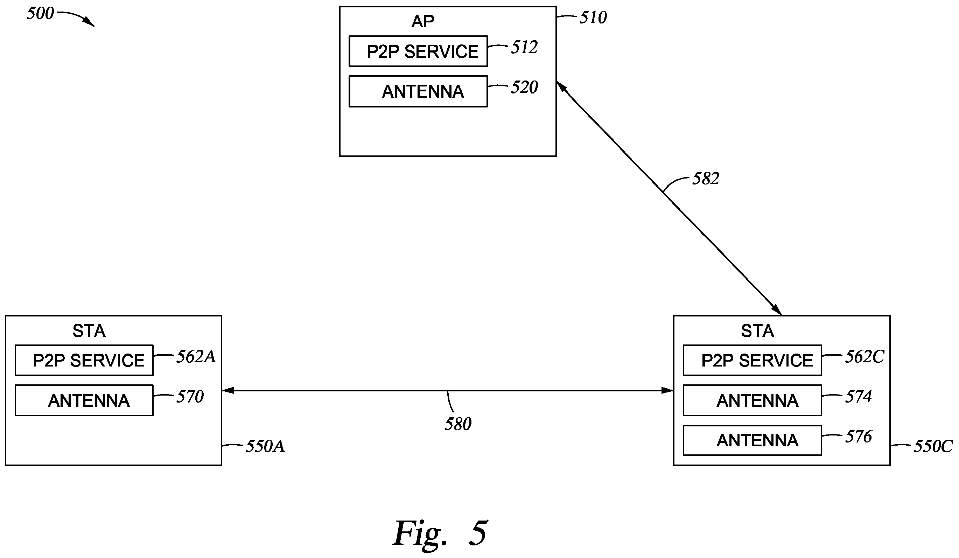

In addition, in some circumstances, time synchronization between transmitters and receivers can be used to facilitate MU MIMO transmission (e.g., as discussed below with regard to Figures 5-6). For example, a receiver may not have CSI at the beginning of a transmission (e.g., in the legacy portion of the PPDU). The receiver may consider all combined signals as a single PPDU. Time aligning the packets can allow the receiver to detect a single PPDU. In an embodiment, time alignment can give the receiver the opportunity to estimate the channel of each client the EHT-LTF portion of a PPDU, which has a specific timing schedule and requires PPDUs to be aligned.

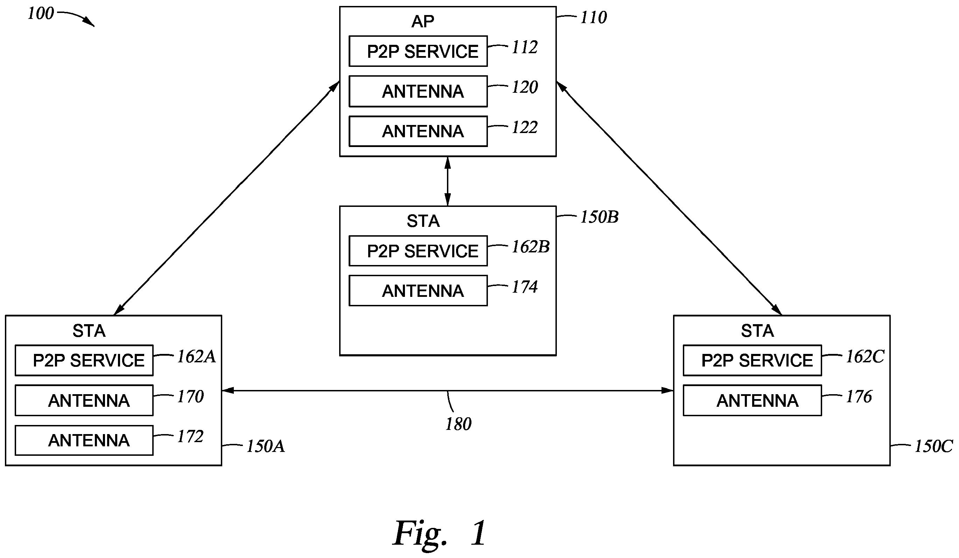

Figure 1 is a block diagram 100 illustrating MU MIMO P2P transmission, according to one embodiment. In an embodiment, an AP 110 is associated with three STAs: an STA 150A, an STA 150B, and an STA 150C. The AP can coordinate and control downlink transmissions from the AP to each STA 150A-C and uplink transmissions from each STA 150A-C to the AP 110. In existing solutions, for example, the AP 110 can facilitate communication from the STA 150A to the STA 150B through the AP 110. The STA 150A can transmit data to the AP 110. The AP 110 receives the data from the STA 150A, and forwards the data to the STA 150C.

In an embodiment, the STA 150A can instead transmit data directly to the STA 150C using a P2P connection 180. For example, assuming the STA 150A and the STA 150C are within transmission range, the STA 150A can use a P2P service 162A to establish the P2P connection 180 and transmit data to the STA 150C. The P2P service 162C in the STA 150C can receive the data. The P2P service 112 in the AP 110 can facilitate establishing the P2P connection 180 and transmitting the data from the STA 150A to the STA 150C. For example, the P2P service 112 in the AP 110 can allocate a portion of its TXOP duration for the P2P connection 180, and can provide this allocation to the STAs 150A and 150C using trigger frames.

As discussed further below, in an embodiment, the AP 110 and one or more of the STAs 150A-C can include multiple antennas and can support MU MIMO data transmission. For example, the AP 110 can include two antennas 120 and 122. The STA 150A can include two antennas 170 and 172, the STA 150B can include one antenna 174, and the STA 150C can include one antenna 176.

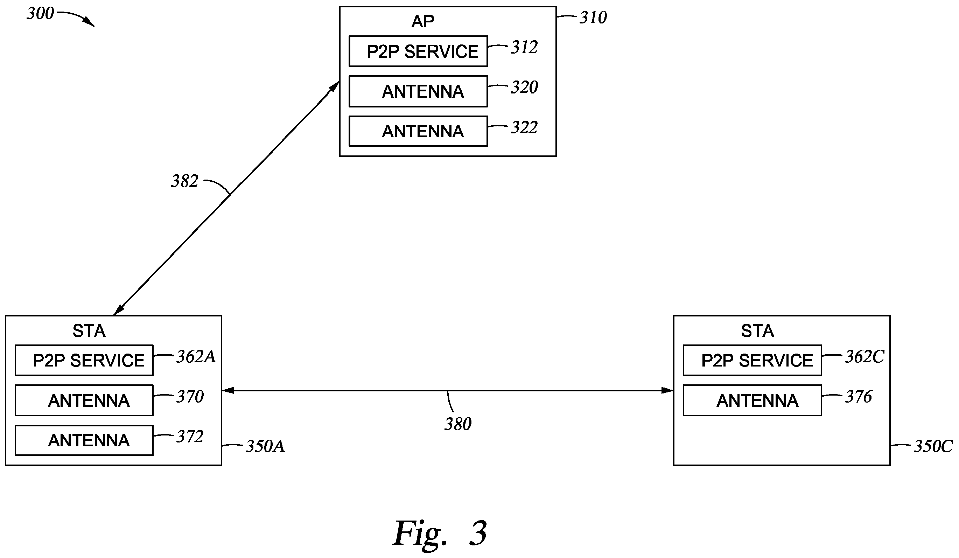

As discussed further below with regard to Figures 3-9, in an embodiment the P2P service 112 in the AP 110 can be used to coordinate P2P connections among the STAs with simultaneous transmission and reception using the multiple antennas. For example, the P2P service 112 in the AP 110 can be used to identify CSI for the connection between the AP 110 and the STA 150A, and for connection between the AP 110 and the STA 150C. The P2P service 112 can use the CSI values to generate a precoding matrix for the AP 110 to facilitate simultaneous transmission and reception using the antennas 120 and 122. Similarly, the P2P service 162A in the STA 150A can generate a precoding matrix for the STA 150A, using CSI for the connection between the STA 150A and the AP 110 and for the P2P connection 180, to facilitate simultaneous transmission using the antennas 170 and 172 (e.g., simultaneous transmission from the STA 150A to the AP 110 and to the STA 150C). This is discussed further below with regard to Figures 3-9.

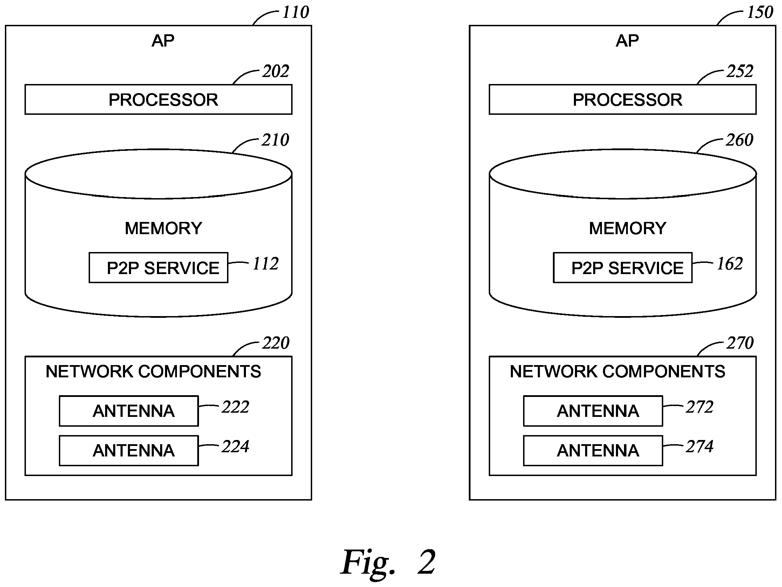

Figure 2 illustrates an AP 110 and an STA 150 for MU MIMO P2P transmission, according to one embodiment. In an embodiment, the STA 150 corresponds with any of the STAs 150A-C illustrated in Figure 1. The AP 110 includes a processor 202, a memory 210, and network components 220. The processor 202 generally retrieves and executes programming instructions stored in the memory 210. The processor 202 is representative of a single central processing unit (CPU), multiple CPUs, a single CPU having multiple processing cores, graphics processing units (GPUs) having multiple execution paths, and the like.

The network components 220 include the components necessary for the AP to interface with a communication network, as discussed above in relation to Figure 1. For example, the network components 220 can include wired, WiFi, or cellular network interface components and associated software. Further, the network components include antennas 222 and 224. In an embodiment, the antennas 222 and 224 are any suitable radio antennas to facilitate wireless communication. For example, the antennas 222 and 224 can be 2.4GHz antennas, 5GHz antennas, or any other suitable antennas. The antennas 222 and 224 can be internal (e.g., built-in) antennas, external antennas, or any other suitable antennas. Further, while two antennas 222 and 224 are illustrated, the AP 110 can include any suitable number of antennas (e.g., one antenna, or more than two antennas).

Although the memory 210 is shown as a single entity, the memory 210 may include one or more memory devices having blocks of memory associated with physical addresses, such as random access memory (RAM), read only memory (ROM), flash memory, or other types of volatile and/or non-volatile memory. The memory 210 generally includes program code for performing various functions related to use of the AP 110. The program code is generally described as various functional "applications" or "modules" within the memory 210, although alternate implementations may have different functions and/or combinations of functions. Within the memory 210, the P2P service 112 facilitates MU MIMO P2P connections among STAs associated with the AP 110. This is discussed further below with regard to Figures 3-8.

The STA 150 includes a processor 252, a memory 260, and network components 270. The processor 252 generally retrieves and executes programming instructions stored in the memory 210. The processor 252 is representative of a single central processing unit (CPU), multiple CPUs, a single CPU having multiple processing cores, graphics processing units (GPUs) having multiple execution paths, and the like.

The network components 270 include the components necessary for the AP to interface with a communication network, as discussed above in relation to Figure 1. For example, the network components 220 can include wired, WiFi, or cellular network interface components and associated software. Further, the network components include antennas 272 and 274. In an embodiment, the antennas 272 and 274 are any suitable radio antennas to facilitate wireless communication. For example, the antennas 272 and 274 can be 2.4GHz antennas, 5GHz antennas, or any other suitable antennas. The antennas 272 and 274 can be internal (e.g., built-in) antennas, external antennas, or any other suitable antennas. Further, while two antennas 272 and 274 are illustrated, the STA 150 can include any suitable number of antennas (e.g., one antenna, or more than two antennas).

Although the memory 260 is shown as a single entity, the memory 210 may include one or more memory devices having blocks of memory associated with physical addresses, such as random access memory (RAM), read only memory (ROM), flash memory, or other types of volatile and/or non-volatile memory. The memory 260 generally includes program code for performing various functions related to use of the STA 150. The program code is generally described as various functional "applications" or "modules" within the memory 260, although alternate implementations may have different functions and/or combinations of functions. Within the memory 260, the P2P service 162 facilitates MU MIMO P2P connections between the STA 150 and one or more other STAs. This is discussed further below with regard to Figures 3-8. In an embodiment, the P2P service 162 corresponds with any of the P2P services 162A-C illustrated in Figure 1.

Figure 3 illustrates MU MIMO P2P transmission with an uplink from an STA to an AP, according to one embodiment. A system 300 includes an STA 350A that includes two antennas 370 and 372. The STA 350A uses the antennas 370 and 372 for MU MIMO transmission to an AP 310 (e.g., an uplink transmission), using the wireless connection 382, and to another STA 350C (e.g., a P2P transmission), using the wireless connection 380. For example, the STA 350A can transmit simultaneously to the AP 310 and the STA 350C, using the multiple antennas 370 and 372. The AP 310 includes two antennas 320 and 322.

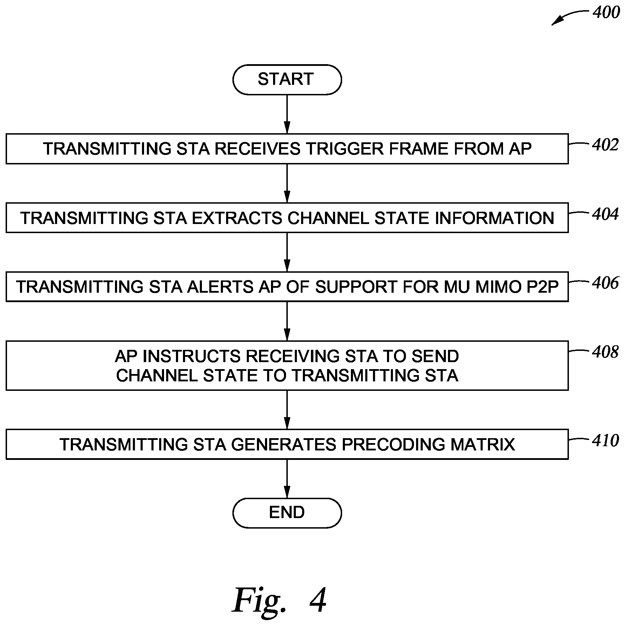

Further, in an embodiment, the STA 350A can use CSI information for the connections 380 and 382 to generate a precoding matrix (e.g., a beamforming matrix) to facilitate the MU MIMO communication with the AP 310 and the STA 350C using the antennas 370 and 372. For example, the AP 310 can provide CSI for the connection 382 in a trigger frame to the STA 350A, and the STA 350C can provide CSI for the connection 380 in a null data packet (NDP) message to the STA 350A (e.g., initiated by the AP 310). A P2P service 362A in the STA 350A (e.g., corresponding to the P2P service 162 illustrated in Figure 2) can use CSI information for the connections 380 and 382 to generate a precoding matrix. This is discussed further below with regard to Figure 4.

Figure 4 is a flowchart 400 illustrating MU MIMO P2P transmission with an uplink from an STA to an AP, according to one embodiment. For example, Figure 4 illustrates techniques for MU MIMO P2P transmission the system 300 illustrated in Figure 3. This is merely an example, and the techniques discussed in relation to Figure 4 are not limited to the system 300 illustrated in Figure 3.

At block 402, a transmitting STA (e.g., the STA 350A) receives a trigger frame from an AP (e.g., the AP 310). In an embodiment, the AP 310 supports orthogonal frequency division multiple access (OFDMA) communication (e.g., using 802.11ax or another suitable wireless protocol). For example, the AP 310 can initiate uplink communication from the STA 350A by transmitting a suitable trigger frame. As one example, the AP 310 can transmit a trigger based (TB) PPDU to the STA 350A. Further, as discussed above, in an embodiment the AP 310 can support a triggered P2P solution. For example, the AP 310 can trigger the P2P connection 380 and allocate a portion of its TXOP duration, by transmitting a trigger frame to the STA 350A.

At block 404, the transmitting STA extracts CSI. For example, a P2P service in the STA 350A (e.g., the P2P service 362A) can extract CSI for the connection 382 from the trigger frame (e.g., from the TB PPDU) received from the AP 310.

At block 406, the transmitting STA alerts the AP of support for MU MIMO P2P. For example, the STA 350A can transmit a message to the AP 310 indicating that the STA 350A supports MU MIMO P2P. In an embodiment, the transmitting STA includes this indication in a buffer status report (BSR) message. For example, the P2P service 362A in the STA 350A can transmit to the AP 310 a BSR with an indication of MU MIMO P2P support (e.g., a flag or any other suitable field). This is merely one example, and any suitable message can be used.

At block 408, the AP instructs the receiving STA to send CSI to the transmitting STA. In an embodiment, a P2P service in the AP receives a message from the transmitting STA indicating support for MU MIMO P2P. The AP then transmits to the receiving STA an instruction to provide the transmitting STA with CSI for the connection between the transmitting STA and the receiving STA.

For example, the P2P service 312 in the AP 310 (e.g., corresponding to the P2P service 112 illustrated in Figure 2) can receive a BSR (or another suitable message) from the STA 350A indicating that the STA 350A supports MU MIMO. The P2P service 312 can then transmit a message to the STA 350C instructing the STA 350C to provide the STA 350A with CSI for the connection 380 between the STA 350C and the STA 350A (e.g., using an antenna 376 in the STA 350C). A P2P service in the STA 350C (e.g., the P2P service 362C) then transmits the CSI for the connection 380 to the STA 350A. In an embodiment, the P2P service 362C transmits a message to the STA 350A including the CSI for the connection 380. Alternatively, or in addition, the P2P service 362A in the STA 350A determines CSI for the connection 380 based on a message transmitted by the STA 350C.

At block 410, the transmitting STA generates a precoding matrix. In an embodiment, the precoding matrix is a beamforming matrix used by the transmitting STA to facilitate MU MIMO transmission using multiple antennas. Further, in an embodiment, existing techniques used to generate this beamforming matrix can take into account the CSI for the connections from the transmitting STA to both its destinations: the AP and the other STA.

For example, the STA 350A receives CSI for both the connection 382 with the AP 310 and the connection 380 with the STA 350C. The P2P service 362A in the STA 350A uses the CSI derived from both the AP 310 and the STA 350C to generate a beamforming matrix to facilitate transmission to both the AP 310 and the STA 350C using the two antennas 370 and 372. For example, the STA350 can use the beamforming matrix to transmit simultaneously to both the AP 310 and the STA 350C, using the two antennas 370 and 372. In an embodiment, the P2P service 362A uses any suitable technique used to generate a beamforming matrix for MU MIMO transmission (e.g., any suitable existing technique).

Figure 5 illustrates MU MIMO P2P transmission with a downlink from an AP to an STA, according to one embodiment. A system 500 includes an AP 510 and two STAs 550A and 550C. In an embodiment, the STA 550C includes two antennas 574 and 576. The STA 550C receives simultaneous transmissions from the AP 510 (e.g., a downlink transmission over the connection 582) and from the STA 550A (e.g., a P2P transmission over the connection 580).

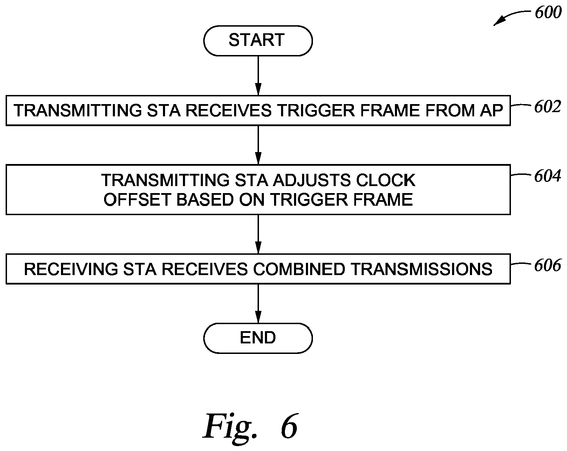

In an embodiment, the STA 550C receives a combined PPDU from the AP 510 and the STA 550A. To facilitate receiving this combined PPDU, the STA 550C can receive the transmissions from the AP 510 and the STA 550A at a synchronized time. In an embodiment, the STA 550A can synchronize its transmission times with the AP 510. For example, the STA 550A can use a trigger frame received from the AP 510 (e.g., a TB PPDU) to synchronize its clock with the AP 510. The STA 550A can then use this synchronized clock to synchronize transmission to the STA 550C. This is discussed further below with regard to Figure 6.

Figure 6 is a flowchart 600 illustrating MU MIMO P2P transmission with a downlink from an AP to an STA, according to one embodiment. For example, Figure 6 illustrates techniques for MU MIMO P2P transmission the system 500 illustrated in Figure 5. This is merely an example, and the techniques discussed in relation to Figure 6 are not limited to the system 500 illustrated in Figure 5.

At block 602, a transmitting STA receives a trigger frame from an AP. For example, as discussed above, the AP 510 supports OFDMA communication (e.g., using 802.11 ax or another suitable wireless protocol). The AP 510 can initiate communication from the STA 550A by transmitting a suitable trigger frame (e.g., a TB PPDU). As another example, the AP 510 can support a triggered P2P solution, in which the AP 510 trigger the P2P connection 580, and allocates a portion of its TXOP, by transmitting a trigger frame to the STA 550A. In an embodiment, the STA 550A receives the trigger frame from the AP 510.

At block 604, the transmitting STA adjusts its clock offset based on the trigger frame. In an embodiment, the transmitting STA can identify carrier frequency offset (CFO) using the received trigger frame. The transmitting STA can calculate a clock offset based on this identified CFO, synchronizing its transmission to the other STA with the AP.

For example, the STA 550A can receive a trigger frame from the AP 510 (e.g., transmitted using a P2P service 512 in the AP 510). The AP 510 includes an antenna 520. The STA 550A includes an antenna 570. A P2P service 562A in the STA 550A (e.g., corresponding to the P2P service 162 illustrated in Figure 2) can identify CFO from the AP using this received trigger frame. The P2P service 562A can then calculate a clock offset between the AP 510 and the STA 550A. The P2P service 562A can use this calculated clock offset to synchronize transmission times, to the STA 550C (and the P2P service 562C), from the AP 510 and the STA 550A. In an embodiment, the synchronized transmission are not sent at exactly the same time, but are transmitted within a small tolerance (e.g., plus or minus 400Hz).

At block 606, the receiving STA receives the combined transmissions. In an embodiment, the receiving STA receives combined transmissions from an AP and another STA that are synchronized in time. For example, the STA 550C receives combined transmission from the AP 510 and the STA 550A. As discussed above, the STA 550A synchronizes its transmission with the AP 510 (e.g., using a trigger frame received from the AP), so that the STA 550C receives synchronized transmissions.

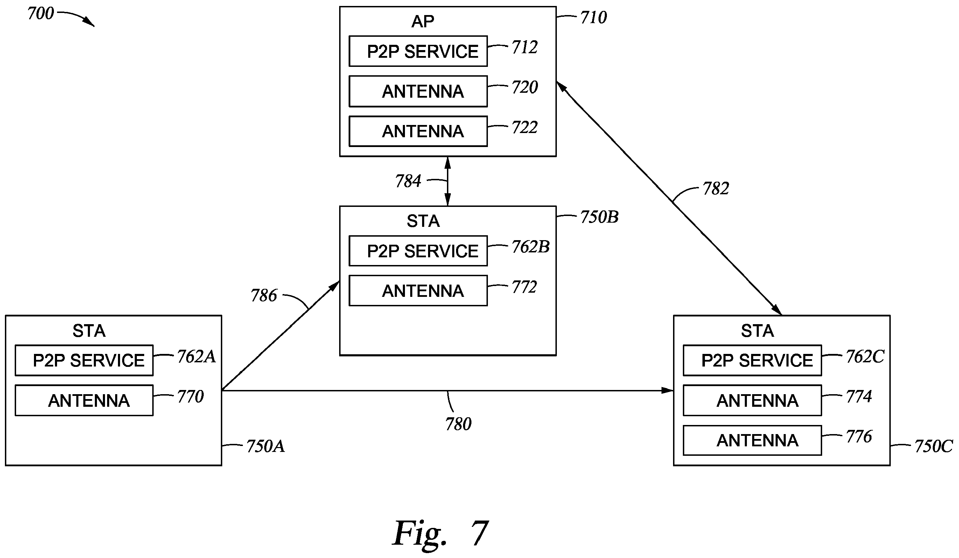

Figure 7 illustrates MU MIMO P2P transmission with simultaneous STA transceivers, according to one embodiment. A system 700 includes an AP 710 and three STAs 750A-C. The AP 710 includes two antennas 720 and 722. The STA 750A includes an antenna 770. The STA 750B includes an antenna 772. The STA 750C includes two antennas 774 and 776.

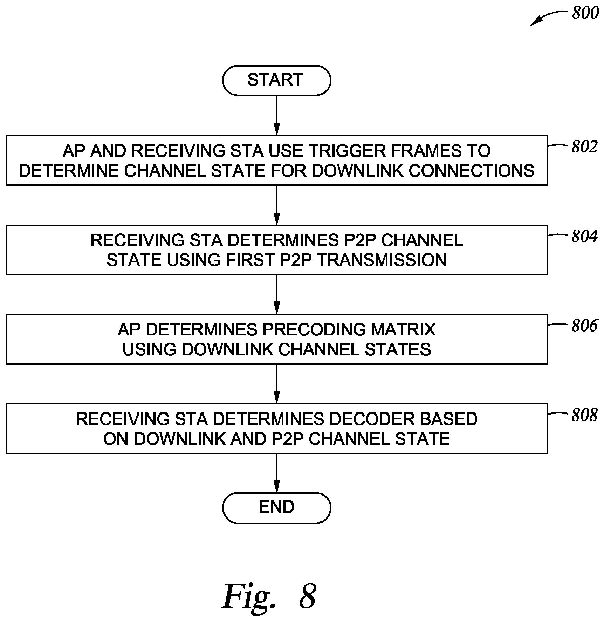

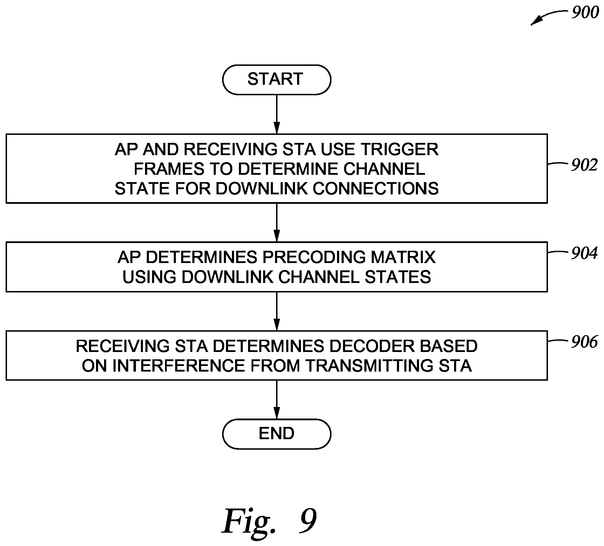

In an embodiment, the system 700 illustrates two pairs of simultaneous transmissions. The AP 710 transmits to the STA 750C using the downlink connection 782, and transmits to the STA 750B using the downlink connection 784. The STA 750A transmits to the STA 750B using the P2P connection 786, and transmits to the STA 750C using the P2P connection 780. In an embodiment, the techniques discussed below with regard to Figures 8 and 9 allow the STA 750A to establish the P2P connections 780 and 786 (e.g., to the other STAs 750C and 750B) without impacting the downlink connections 782 and 784 from the AP 710. For example, as discussed further below, the STA 750A can establish the P2P connections 780 and 786 while generating very little interference with the downlink connections 782 and 784 from the AP 710 to the STAs 750B and 750C. The STAs 750B and 750C can extract data from the transmission by the AP 710, while simultaneously receiving transmissions from the STA 750A using the P2P connections 780 and 786.

Figure 8 is a flowchart 800 illustrating use of full channel state information for MU MIMO P2P transmission with simultaneous STA transceivers, according to one embodiment. For example, Figure 8 illustrates use of full channel state information for MU MIMO P2P transmission with simultaneous STA transceivers in the system 700 illustrated in Figure 7. This is merely an example, and the techniques discussed in relation to Figure 8 are not limited to the system 700 illustrated in Figure 7.

In an embodiment, a P2P service 712 in the AP 710 (e.g., corresponding to the P2P service 112 illustrated in Figure 2) uses full channel state information to determine a suitable precoding matrix (e.g., a beamforming matrix) to transmit data to the STAs 750B and 750C using the antennas 720 and 722. Similarly, a P2P service 762C in the STA 750C (e.g., corresponding to the P2P service 162 illustrated in Figure 2) uses full channel state information to determine a suitable decoder (e.g., a minimum mean square equalizer (MMSE) decoder) to receive data from the AP 710 and the STA 750A, using the antennas 774 and 776. For example, the P2P service 712 in the AP 710 can use CSI for the downlink connections 782 and 784 to determine a beamforming matrix for its antennas 720 and 722. The P2P service 762A in the STA 750C uses the channel state of the downlink connection 782 and the P2P connection 780 to determine a decoder for its antennas 774 and 776.

In an embodiment, however, it is difficult for the P2P service 762A in the STA 750C to determine the CSI for the P2P connection 780. In an embodiment, Figure 8 illustrates techniques to be used to determine the CSI for the P2P connection 780 at the STA 750C and to use this CSI to generate a precoding matrix (e.g., use of full channel state information). Figure 9, discussed further below, discusses techniques to generate a precoding matrix for the STA 750C without determining the CSI for the P2P connection 780 (e.g., use of partial channel state information).

At block 802, an AP and a receiving STA use trigger frames to determine CSI for downlink connections. In an embodiment, the P2P service 712 (e.g., corresponding to the P2P service 112 illustrated in Figure 2) in the AP 710 can use trigger frames transmitted to the STA 750B and 750C to determine CSI for the downlink connections 784 and 782. For example, as discussed above, the AP 710 supports OFDMA communication (e.g., using 802.11ax or another suitable wireless protocol). The AP 710 can initiate communication with the STAs 750B and 750C by transmitting suitable trigger frames (e.g., a TB PPDU). As another example, the AP 710 can support a triggered P2P solution, in which the AP 710 triggers the P2P connections 780 and 786, and allocates a portion of its TXOP, by transmitting a trigger frame to the STA 750A.

The AP 710 can use these trigger frames to determine CSI for the downlink connections 784 and 782. Further, the P2P service 762B in the STA 750B, and the P2P service 762C in the STA 750C, can use trigger frames transmitted by the AP 710 to determine CSI for the respective downlink connections 784 and 782.

At block 804, the receiving STA determines P2P CSI using the first P2P transmission. For example, as discussed above, the STA 750C uses CSI for the downlink connection 782 and the P2P connection 780 to determine a suitable decoder (e.g., an MMSE decoder). The STA 750C determines CSI for the downlink connection 782 from a trigger frame transmitted by the AP 710. But, in the embodiment illustrated in Figure 8, the STA 750C also needs CSI for the P2P connection 780. In an embodiment, the STA 750C determines CSI for the P2P connection 780 using a transmission from the STA 750A (e.g., a first transmission). In an embodiment, this requires the STA 750C to initialize the decoder using legacy information (e.g., default information, or implementation from a prior deployment). After the STA 750C receives a transmission from the STA 750A, the STA 750C is able to determine CSI for the P2P connection 780 and determine a suitable updated decoder (e.g., a suitable MMSE decoder).

At block 806, the AP determines a precoding matrix (e.g., a beamforming matrix) using downlink channel states. For example, the AP 710 can use the CSI for the downlink connections 784 and 782, discussed above in relation to block 802, to determine a beamforming matrix for the two antennas 720 and 722.

At block 808, the receiving STA determines a decoder based on downlink and P2P channel state. For example, as discussed above in relation to block 804, the STA 750C can use a trigger frame from the AP 710 to determine CSI for the downlink connection 782. The STA 750C can use a transmission from the STA 750A (e.g., a first transmission) to determine CSI for the P2P connection 780. The STA 750C can then determine a suitable decoder for its antennas 774 and 776 using CSI for the downlink connection 782 and the P2P connection 780.

Figure 9 is a flowchart 900 illustrating use of partial channel state information for MU MIMO P2P transmission with simultaneous STA transceivers, according to one embodiment. For example, Figure 9 illustrates use of partial channel state information for MU MIMO P2P transmission with simultaneous STA transceivers in the system 700 illustrated in Figure 7. This is merely an example, and the techniques discussed in relation to Figure 9 are not limited to the system 700 illustrated in Figure 7.

As discussed above, in an embodiment it is difficult for the STA 750C to determine the CSI for the P2P connection 780. Figure 8 illustrates the STA 750C using a transmission over the P2P connection 780 to determine CSI for the P2P connection 780. In an embodiment, Figure 9 differs from Figure 8 by illustrating MU MIMO P2P transmission without requiring the STA 750C to determine the CSI for the P2P connection 780.

At block 902, an AP and a receiving STA use trigger frames to determine CSI for downlink connections. In an embodiment, this is similar to block 802 discussed above. For example, a P2P service 712 in the AP 710 can transmit trigger frames to the STA 750B and the STA 750C, and can use these trigger frames to determine CSI for the downlink connections 784 and 782. Further, the P2P service 762B in the STA 750B, and the P2P service 762C in the STA 750C, can use trigger frames transmitted by the AP 710 to determine CSI for the respective downlink connections 784 and 782.

At block 904, the AP determines a precoding matrix (e.g., a beamforming matrix) using downlink channel states. In an embodiment, this is similar to block 806 discussed above. For example, the AP 710 can use the CSI for the downlink connections 784 and 782, discussed above in relation to block 802, to determine a beamforming matrix for the two antennas 720 and 722.

At block 906, the receiving STA determines a decoder based on interference from the transmitting STA (e.g., measured interference). CSI is one example of connection information relating to a P2P connection. Interference data relating to the P2P connection (e.g., an interference covariance matrix) is another example of connection information. As discussed above, in the embodiment illustrated in Figure 9 the receiving STA does not use CSI for the P2P connection to determine the decoder. In an embodiment, the receiving STA instead uses measured interference data from the transmitting STA.

For example, the STA 750C does not receive CSI for the P2P connection 780. Instead, the STA 750C uses a measured interference data (e.g., an interference covariance matrix) from the STA 750A to determine the decoder. For example, the STA 750C can use an interference covariance matrix from the STA 750A to determine a decoder (e.g., an MMSE decoder) for its antennas 774 and 776.

Alternatively, or in addition, the STA 750C can further use CSI for the P2P connection 780. For example, the STA 750C can use an interference covariance matrix from the STA 750A to set initial values for a decoder (e.g., for an MMSE decoder). The STA 750C can then determine CSI for the P2P connection 780 based on a first transmission from the STA 750A using the P2P connection 780, and can update the decoder.

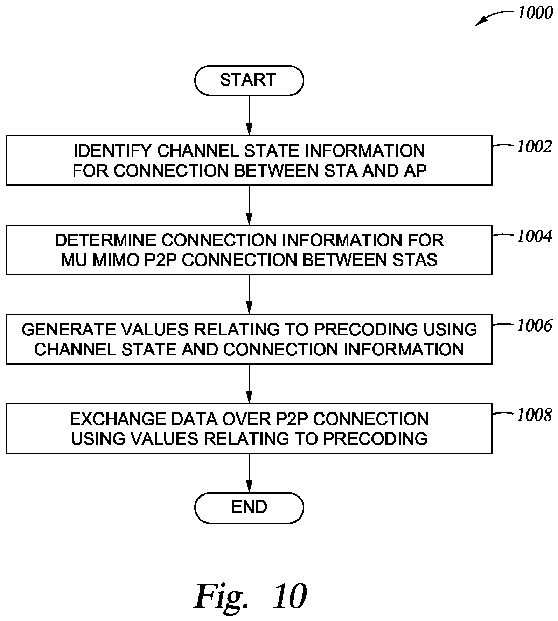

Figure 10 is a flowchart 1000 illustrating MU MIMO P2P transmission among STAs and an AP, according to one embodiment. At block 1002 a P2P service (e.g., in an STA) identifies CSI for a connection between the STA and an AP. For example, as discussed above in relation to Figure 3 and blocks 402 and 404 in Figure 4, the P2P service 362A in the STA 350A can identify CSI for the connection 382 between the STA 350A and the AP 310. As another example, as discussed above in relation to Figure 7 and blocks 802 and 902 in Figures 8 and 9, respectively, the P2P service 762C in the STA 750C can identify CSI for the connection 782 between the STA 750C and the AP 710.

At block 1004, the P2P service determines connection information for a MU MIMO P2P connection between STAs. For example, as discussed above in relation to Figure 3 and blocks 406 and 408 in Figure 4, the P2P service 362A in the STA 350A can determine CSI for the MU MIMO P2P connection 380 between the STA 350A and the STA 350C. As another example, as discussed above in relation to Figure 7 and block 804 in Figure 8, the P2P service 762C can determine CSI for the MU MIMO P2P connection 780 between the STA 750A and the STA 750C. As another example, as discussed above in relation to Figure 7 and block 906 in Figure 9, the P2P service 762C can determine interference data (e.g., an interference covariance matrix) for the MU MIMO P2P connection 780 between the STA 750A and the STA 750C.

At block 1006, the P2P service generates values relating to precoding using CSI and connection information. For example, as discussed above in relation to Figure 3 and block 410 in Figure 4, the P2P service 362A in the STA 350A can generate a precoding matrix using the CSI for the connections 380 and 382. As another example, as discussed above in relation to Figure 7 and block 808 in Figure 8, the P2P service 762C in the STA 750C can determine a decoder (e.g., an MMSE decoder) using CSI for the connections 780 and 782. As another example, as discussed above in relation to Figure 7 and block 906 in Figure 9, the P2P service 762C in the STA 750C can determine a decoder (e.g., an MMSE decoder) using CSI for the connection 782 and interference data for the connection 780.

At block 1008, the P2P service exchanges data over the P2P connection using the values relating to precoding. For example, as illustrated above in relation to Figure 3, the STA 350A can transmit data over the connection 380 using the antennas 370 and 372 and the precoding matrix generated at block 1006. As another example, as illustrated above in relation to Figure 7, the STA 750C can receive data over the connection 780 using the antennas 774 and 776 and the decoder determined at block 1006.

In the current disclosure, reference is made to various embodiments. However, the scope of the present disclosure is not limited to specific described embodiments. Instead, any combination of the described features and elements, whether related to different embodiments or not, is contemplated to implement and practice contemplated embodiments. Additionally, when elements of the embodiments are described in the form of "at least one of A and B," it will be understood that embodiments including element A exclusively, including element B exclusively, and including element A and B are each contemplated. Furthermore, although some embodiments disclosed herein may achieve advantages over other possible solutions or over the prior art, whether or not a particular advantage is achieved by a given embodiment is not limiting of the scope of the present disclosure. Thus, the aspects, features, embodiments and advantages disclosed herein are merely illustrative and are not considered elements or limitations of the appended claims except where explicitly recited in a claim(s). Likewise, reference to "the invention" shall not be construed as a generalization of any inventive subject matter disclosed herein and shall not be considered to be an element or limitation of the appended claims except where explicitly recited in a claim(s).

As will be appreciated by one skilled in the art, the embodiments disclosed herein may be embodied as a system, method or computer program product. Accordingly, embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, embodiments may take the form of a computer program product embodied in one or more computer readable medium(s) having computer readable program code embodied thereon.

Program code embodied on a computer readable medium may be transmitted using any appropriate medium, including but not limited to wireless, wireline, optical fiber cable, RF, etc., or any suitable combination of the foregoing.

Computer program code for carrying out operations for embodiments of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present disclosure are described herein with reference to flowchart illustrations and/or block diagrams of methods, apparatuses (systems), and computer program products according to embodiments presented in this disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the block(s) of the flowchart illustrations and/or block diagrams.

These computer program instructions may also be stored in a computer readable medium that can direct a computer, other programmable data processing apparatus, or other device to function in a particular manner, such that the instructions stored in the computer readable medium produce an article of manufacture including instructions which implement the function/act specified in the block(s) of the flowchart illustrations and/or block diagrams.

The computer program instructions may also be loaded onto a computer, other programmable data processing apparatus, or other device to cause a series of operational steps to be performed on the computer, other programmable apparatus or other device to produce a computer implemented process such that the instructions which execute on the computer, other programmable data processing apparatus, or other device provide processes for implementing the functions/acts specified in the block(s) of the flowchart illustrations and/or block diagrams.

The flowchart illustrations and block diagrams in the Figures illustrate the architecture, functionality, and operation of possible implementations of systems, methods, and computer program products according to various embodiments. In this regard, each block in the flowchart illustrations or block diagrams may represent a module, segment, or portion of code, which comprises one or more executable instructions for implementing the specified logical function(s). It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

Examples of the present disclosure are set out in the following numbered clauses.
1. A method, comprising:
   identifying, at a first wireless station (STA) comprising a plurality of radio antennas, channel state information (CSI) relating to a connection between the first STA and a wireless access point (AP);
   determining, at the first STA, connection information relating to a multi-user (MU) multiple-input-multiple-output (MIMO) peer-to-peer connection between the first STA and a second STA;
   generating at the first STA a plurality of values relating to precoding for the plurality of radio antennas, based on the CSI and the connection information; and
   exchanging data over the peer-to-peer connection between the first STA and the second STA, using the plurality of values relating to precoding.
2. The method of clause 1, wherein the plurality of values relating to precoding comprise a precoding matrix, and wherein the first STA transmits data to the second STA over the peer-to-peer connection, and to the AP using the connection between the first STA and the AP, using the precoding matrix.
3. The method of clause 2, wherein the first STA determines the CSI based on a trigger frame received from the AP.
4. The method of clause 3, wherein the connection information comprises second CSI relating to the peer-to-peer connection, and wherein the first STA receives the second CSI from the second STA based on a transmission from the AP to the second STA.
5. The method of clause 1, wherein the plurality of values relating to precoding comprises a decoder, and wherein the first STA receives data from the second STA over the peer-to-peer connection, and from the AP using the connection between the first STA and the AP, using the decoder.
6. The method of clause 5, wherein the connection information relating to the peer-to-peer connection comprises interference information.
7. The method of clause 6, wherein the interference information comprises a covariance matrix.
8. The method of clause 5, wherein the connection information comprises second CSI relating to the peer-to-peer connection, and wherein the first STA determines the second CSI based on a data transmission received from the second STA using the peer-to-peer connection.
9. The method of clause 5, wherein the AP comprises a second plurality of antennas, the method further comprising:
   determining a precoding matrix, at the AP relating to the second plurality of antennas, based on the CSI relating to the connection between the AP and the first STA.
10. The method of clause 9, wherein the determining the precoding matrix is further based on second CSI relating to a connection between the AP and a third STA.
11. The method of clause 1, further comprising:
   adjusting, at the first STA, a clock offset for receiving data using the plurality of antennas, based on a trigger frame received from the AP.
12. A system, comprising:
   a processor; and
   a memory having instructions stored thereon which, when executed on the processor, performs an operation comprising:
      identifying, at a first wireless station (STA) comprising a plurality of radio antennas, channel state information (CSI) relating to a connection between the first STA and a wireless access point (AP);
      determining, at the first STA, connection information relating to a multi-user (MU) multiple-input-multiple-output (MIMO) peer-to-peer connection between the first STA and a second STA;
      generating at the first STA a plurality of values relating to precoding for the plurality of radio antennas, based on the CSI and the connection information; and
      exchanging data over the peer-to-peer connection between the first STA and the second STA, using the plurality of values relating to precoding.
13. The system of clause 12, wherein the plurality of values relating to precoding comprise a precoding matrix, and wherein the first STA transmits data to the second STA over the peer-to-peer connection, and to the AP using the connection between the first STA and the AP, using the precoding matrix.
14. The system of clause 13, wherein the first STA determines the CSI based on a trigger frame received from the AP.
15. The system of clause 12, wherein the plurality of values relating to precoding comprises a decoder, and wherein the first STA receives data from the second STA over the peer-to-peer connection, and from the AP using the connection between the first STA and the AP, using the decoder.
16. The system of clause 15, wherein the connection information relating to the peer-to-peer connection comprises interference information.
17. A non-transitory computer-readable medium having instructions stored thereon which, when executed by a processor, performs an operation comprising:
   identifying, at a first wireless station (STA) comprising a plurality of radio antennas, channel state information (CSI) relating to a connection between the first STA and a wireless access point (AP);
   determining, at the first STA, connection information relating to a multi-user (MU) multiple-input-multiple-output (MIMO) peer-to-peer connection between the first STA and a second STA;
   generating at the first STA a plurality of values relating to precoding for the plurality of radio antennas, based on the CSI and the connection information; and
   exchanging data over the peer-to-peer connection between the first STA and the second STA, using the plurality of values relating to precoding.
18. The computer-readable medium of clause 17, wherein the plurality of values relating to precoding comprise a precoding matrix, and wherein the first STA transmits data to the second STA over the peer-to-peer connection, and to the AP using the connection between the first STA and the AP, using the precoding matrix.
19. The computer-readable medium of clause 18, wherein the first STA determines the CSI based on a trigger frame received from the AP.
20. The computer-readable medium of clause 17, wherein the plurality of values relating to precoding comprises a decoder, wherein the first STA receives data from the second STA over the peer-to-peer connection, and from the AP using the connection between the first STA and the AP, using the decoder, and wherein the connection information relating to the peer-to-peer connection comprises interference information.

In view of the foregoing, the scope of the present disclosure is determined by the claims that follow.

## Claims

1. A method, comprising:
identifying, at a first wireless station (STA) comprising a plurality of radio antennas, channel state information (CSI) relating to a connection between the first STA and a wireless access point (AP);
determining, at the first STA, connection information relating to a multi-user (MU) multiple-input-multiple-output (MIMO) peer-to-peer connection between the first STA and a second STA;
generating at the first STA a plurality of values relating to precoding for the plurality of radio antennas, based on the CSI and the connection information; and
exchanging data over the peer-to-peer connection between the first STA and the second STA, using the plurality of values relating to precoding.

2. The method of claim 1, wherein the plurality of values relating to precoding comprise a precoding matrix, and wherein the first STA transmits data to the second STA over the peer-to-peer connection, and to the AP using the connection between the first STA and the AP, using the precoding matrix.

3. The method of claim 2, wherein the first STA determines the CSI based on a trigger frame received from the AP.

4. The method of claim 3, wherein the connection information comprises second CSI relating to the peer-to-peer connection, and wherein the first STA receives the second CSI from the second STA based on a transmission from the AP to the second STA.

5. The method of any preceding claim, wherein the plurality of values relating to precoding comprises a decoder, and wherein the first STA receives data from the second STA over the peer-to-peer connection, and from the AP using the connection between the first STA and the AP, using the decoder.

6. The method of claim 5, wherein the connection information relating to the peer-to-peer connection comprises interference information.

7. The method of claim 6, wherein the interference information comprises a covariance matrix.

8. The method of any of claims 5 to 7, wherein the connection information comprises second CSI relating to the peer-to-peer connection, and wherein the first STA determines the second CSI based on a data transmission received from the second STA using the peer-to-peer connection.

9. The method of any of claims 5 to 8, wherein the AP comprises a second plurality of antennas, the method further comprising:
determining a precoding matrix, at the AP relating to the second plurality of antennas, based on the CSI relating to the connection between the AP and the first STA.

10. The method of claim 9, wherein the determining the precoding matrix is further based on second CSI relating to a connection between the AP and a third STA.

11. The method of any preceding claim, further comprising:
adjusting, at the first STA, a clock offset for receiving data using the plurality of antennas, based on a trigger frame received from the AP.

12. A system configured to perform the method of any preceding claim.

13. A computer-readable medium having instructions stored thereon which, when executed by a processor of a device, cause the device to perform the method of any of claims 1 to 11.
